# FASCICULE DE BREVET EUROPEEN

(11) **EP 2 659 157 B1**
(45) Date de publication et mention de la délivrance du brevet: **03.02.2016**
(21) Numéro de dépôt: 11815521.7
(22) Date de dépôt: 22.12.2011
(51) Int. Cl.: F16D 65/092, F16D 69/04, F16D 65/00

(54) **PLOT DE FRICTION SOUPLE ET GARNITURE DE FREIN POURVUE D'UN TEL PLOT**
FLEXIBLER BREMSKLOTZ UND BREMSFUTTER MIT SOLCHEM KLOTZ
FLEXIBLE FRICTION PAD AND BRAKE LINING PROVIDED WITH SUCH A PAD

(30) Priorité: 28.12.2010 FR 1005140
(43) Date de publication de la demande: 06.11.2013
(73) Titulaire: Faiveley Transport, 92230 Gennevilliers (FR)
(72) Inventeur: CABOURO, Gwenaël, 92400 Courbevoie (FR); LELIEVRE, Loïc, 92700 Colombes (FR)
(74) Mandataire: Novagraaf Technologies
(86) Numéro de dépôt international: PCT/FR2011/053152
(87) Numéro de publication internationale: WO 2012/089968

(56) Documents cités:
- EP-A2- 1 167 806
- DE-B- 1 575 774
- US-A- 2 451 326
- US-A- 4 762 214

## Description

La présente invention concerne les garnitures de frein à disque et les supports destinés à recevoir les éléments de friction.

Les garnitures de frein, notamment pour les véhicules ferroviaires, sont généralement constituées d'au moins une plaque de base servant de support sur laquelle sont fixés un ou plusieurs plots, comportant le matériau de friction. On connait par exemple les demandes de brevets européens EP1679452 et EP1957820 qui divulguent de telles garnitures de frein. Hors des applications pour les véhicules ferroviaires léger, une même garniture de frein comporte généralement plusieurs plaques de bases chacune, souvent deux par face de disque de frein, pourvues d'un ou plusieurs plots et mobiles par rapport à une face du disque de frein.

Toutefois, la rigidité du montage des plots sur la base peut engendrer non seulement une usure prématurée et irrégulière des matériaux de friction à cause de défauts de planéité et de parallélisme entre la surface de friction des matériaux de friction et la surface du disque lors du freinage, mais aussi des contraintes intenses dans les matériaux de friction et dans leurs éléments de fixation sur la base. En outre, les vibrations induites lors du freinage sont généralement à l'origine de bruits stridents que l'on cherche à minimiser, et il est préférable que les éléments de friction soient espacés de manière à améliorer l'image thermographique de la garniture vis-à-vis du disque lors d'un freinage, ainsi qu'à faciliter leur refroidissement et l'évacuation des débris d'usure.

Le document US 2 451 326 A montre un plot de friction d'après le préambule de la revendication 1.

Un des objectifs de la présente invention est alors de limiter tout ou partie des inconvénients précités.

A cet effet est proposé, suivant un premier aspect de l'invention, un plot de friction destiné à être monté sur un support de base, le plot comprenant un socle et au moins un premier matériau de friction, le premier matériau de friction étant fixé sur au moins une partie dudit socle, le socle et le premier matériau de friction définissant à leur interface un premier plan, le socle dudit plot présentant en outre :
- un support de fixation auquel est fixé au moins le premier matériau de friction,
- au moins une première interface d'accroche à distance du support de fixation selon une direction parallèle au premier plan, pour fixer le plot directement ou indirectement au support de base, et
- au moins un premier col s'étendant parallèlement au premier plan, formant une lamelle élastique entre le support de fixation et la première interface d'accroche, pour permettre au support de fixation de s'accommoder de déplacements de translation et rotation selon toutes les directions.

Le col formant une lamelle élastique constitue une zone de déformation privilégiée. Ainsi, lorsque le plot est monté sur la base, les efforts dus au freinage transmis à l'interface d'accroche sont minimisés.

De préférence, le socle a une épaisseur comprise entre 0,5 et 5 millimètres, de préférence de 2 millimètres, notamment au niveau du support de fixation et de la première interface d'accroche. Le col présente de préférence, une épaisseur au maximum égale à celle du support de fixation ou de la première interface d'accroche pour pouvoir se déformer en minimisant les contraintes transmises à l'interface d'accroche.

De préférence, au moins la première interface d'accroche comporte au moins un point d'accroche. Le point d'accroche est par exemple constitué par un trou qui permet alors de fixer le socle du plot à la base, par exemple par des rivets. De préférence, la première interface d'accroche comporte au moins deux points d'accroche, par exemple deux trous distants l'un de l'autre.

De préférence, au moins la première interface d'accroche présente au moins un premier relief de reprise d'effort et/ou de couple. En effet, il est préférable que les moyens de fixation du socle soient dissociés des zones de reprise d'effort.

Selon un exemple de réalisation, ce premier relief de reprise d'effort et/ou de couple est un logement.

Selon un autre exemple de réalisation, le plot, de préférence au niveau du support de fixation, présente au moins une première languette d'ancrage du matériau de friction.

Selon un mode préférentiel de réalisation, le plot présente deux interfaces d'accroche disjointes, à distance du support de fixation selon une direction parallèle au premier plan, la première interface d'accroche et la deuxième interface d'accroche étant reliées au support de fixation respectivement par un premier et un deuxième col. Ainsi, le support de fixation présentant le matériau de friction est apte à se déplacer selon toutes les directions et les contraintes engendrées transmises aux interfaces d'accroches sont minimisées.

De préférence, la première et la deuxième interface d'accroche comprennent chacune deux points d'accroche distants l'un de l'autre. On peut alors définir un centre géométrique pour chaque point d'accroche, et l'on désignera dans la suite A et A' les centres des points d'accroche de la première interface d'accroche, et B et B' ceux de la deuxième interface d'accroche.

Selon un exemple de réalisation, chaque socle présente un premier relief et un deuxième relief de reprise d'effort et/ou de couple. Le premier relief est de préférence situé entre les deux points d'accroche de la première interface d'accroche et le deuxième relief est de préférence situé entre les deux points d'accroche de la deuxième interface d'accroche.

Avantageusement, les deux points d'accroche de la première interface d'accroche sont séparés d'une même distance d que les deux points d'accroche de la deuxième interface d'accroche. Cette distance d est la longueur du segment joignant les centres des deux points d'accroche d'une même interface d'accroche, soit [AA']=d et [BB']=d. Plus généralement on peut avoir intérêt à ce que la géométrie des points d'accroche de la première interface soit identique à celle des points d'accroche de la deuxième interface, de façon à faciliter leur montage par un même outillage.

De préférence, le matériau de friction d'un plot présente une surface de frottement comprise entre 10 et 600 cm2, de sorte que, suivant le nombre de plots par garniture, on obtienne une surface totale de frottement de la garniture sur une face de disque de frein comprise par exemple entre 200 et 600 cm2.

De préférence, au moins un des côtés du quadrilatère formant le support de fixation est courbe. Ainsi, la forme des plots permet de suivre la forme d'une base sur laquelle lesdits plots sont destinés à être fixés.

De préférence, le matériau de friction est fritté sur le support de fixation dudit socle, comme il est d'usage dans ce type de technologie.

Selon un autre aspect de l'invention, est aussi proposée une garniture de frein, en une ou plusieurs parties, de préférence de deux parties symétriques, chaque partie comprenant :
- une base, présentant une face frontale, et une face dorsale du côté de laquelle peut être fixé un rail en queue d'aronde,
- au moins un premier plot de friction tel que défini précédemment, fixé du côté de la face frontale de la base.

De préférence, la base de chaque partie de la garniture de frein comporte au moins un point de fixation, par exemple un alésage, apte à coopérer avec un point d'accroche d'une interface d'accroche du premier plot. Par exemple, l'alésage est apte à recevoir un rivet pour fixer le plot. De préférence, au moins le premier plot est fixé par au moins un point d'accroche à un point de fixation de la base de la garniture de frein grâce à un rivet.

Avantageusement, la base de chaque partie de la garniture de frein présente au moins un relief complémentaire au relief de reprise d'effort et/ou de couple dudit plot.

De préférence, le relief complémentaire au relief de reprise d'effort et/ou de couple est un demi-cisaillé. Le demi-cisaillé peut être constitué par une protubérance, par exemple, de forme rectangulaire, de longueur L, largeur l et hauteur h. De préférence, h est plus grand que 1 et L/l est compris entre 1 et 10.

Avantageusement, le support de fixation dudit premier plot et la face frontale de la base à laquelle le premier plot est fixé définissent entre eux un espace. Cet espace peut comprendre une couche intermédiaire, de préférence, en un matériau d'amortissement, le cas échéant isolant thermique pour amortir les vibrations, notamment dans la partie du spectre engendrant des bruits tels que des crissements, et limiter le cas échéant la transmission de chaleur entre le socle et la base de la garniture de frein.

De préférence, chaque base de la garniture comprend plusieurs plots, par exemple cinq plots.

L'invention, selon un mode préférentiel de réalisation, sera bien comprise et ses avantages apparaîtront mieux à la lecture de la description détaillée qui suit, à titre indicatif et nullement limitatif, et en référence aux dessins annexés présentés ci-après :
- la figure 1, représente une vue en plan d'un socle d'un plot selon l'invention,
- la figure 2 représente un plot selon l'invention,
- la figure 3 représente une base de garniture de frein en deux parties selon l'invention destinée à recevoir des plots selon la figure 1 ou 2,
- la figure 4 est une vue de coupe d'un demi-cisaillé,
- la figure 5 est une garniture de frein en deux parties selon l'invention avec des plots,
- la figure 6 est une coupe de la garniture de frein de la figure 5 selon A-A,
- la figure 7 est une coupe de la garniture de frein de la figure 5 selon B-B,
- La figure 8 est une vue détaillée de la zone C de la figure 7.

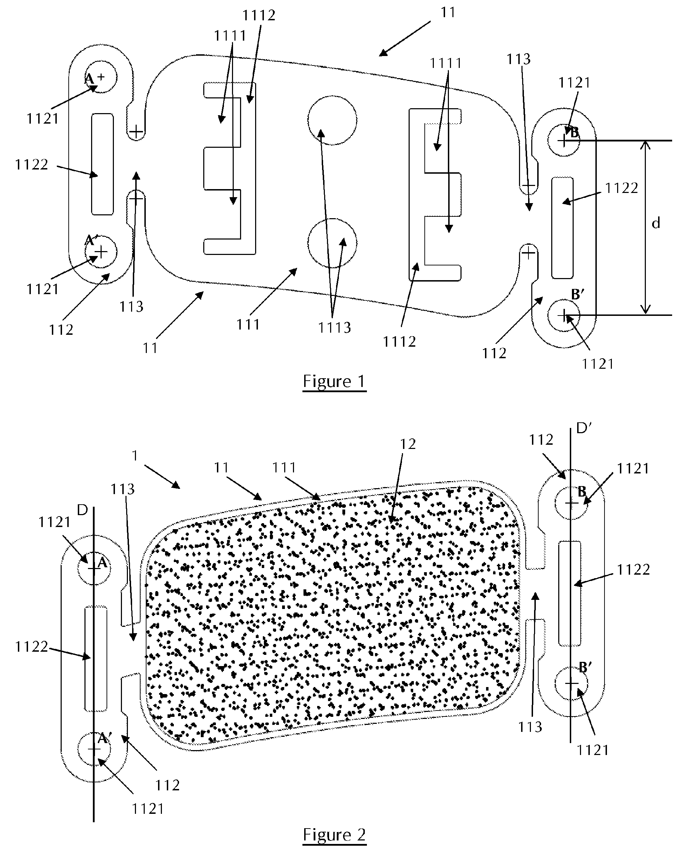

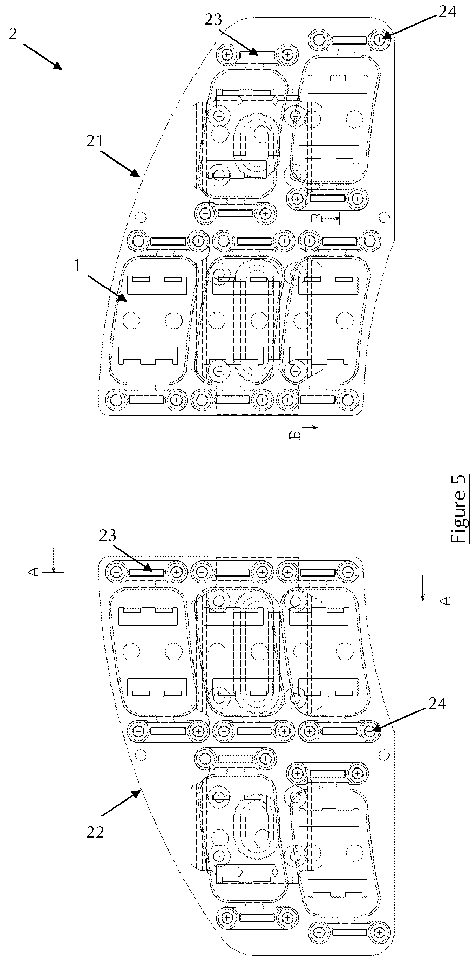

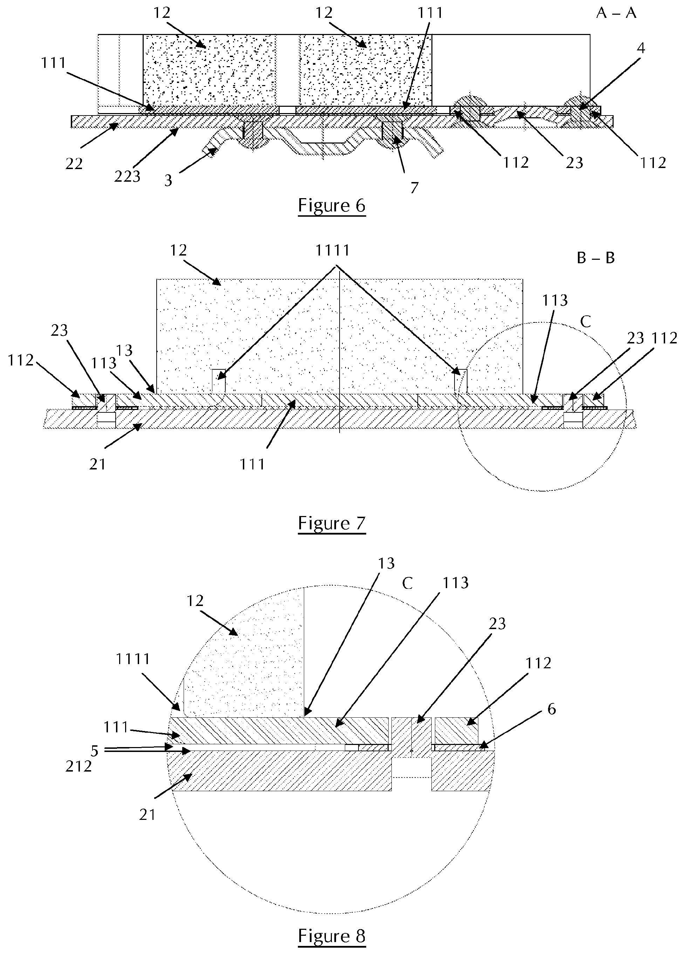

Les éléments identiques représentés sur les figures 1 à 8 sont identifiés par des références numériques identiques.

Un plot de friction 1 selon l'invention, destiné à être monté sur une garniture de frein 2 en une ou plusieurs parties, comprend un socle 11 et un matériau de friction 12.

Selon le présent exemple de réalisation, le socle 11 présente
- un support de fixation 111 sur lequel peut être fixé le matériau de friction 12, par exemple par frittage,
- deux interfaces d'accroche 112 pour fixer le plot 1 directement ou indirectement à une base (21, 22) d'une garniture de frein 2,
- et deux cols 113 formant une lamelle élastique entre le support de fixation 111 et chacune des deux interfaces d'accroche 112.

Le socle peut être formé à partir d'une tôle mince, par exemple de 2 mm d'épaisseur.

Le support de fixation 111 présente une forme quadrilatérale dont les grands côtés sont légèrement arrondis afin de mieux suivre la forme de la base (21, 22) d'une garniture de frein 2 à laquelle il est destiné à être fixé.

Le support de fixation 111 présente au moins une première languette d'ancrage 1111 du matériau de friction 12, en l'occurrence quatre languettes d'ancrage 1111. Les languettes d'ancrage 1111 peuvent aussi être formées par emboutissage, voire par découpage laser de la tôle formant le socle 11. Des zones ajourées 1112 peuvent également être formées avec des surfaces apparentes plus ou moins grandes que celles représentées sur la figure 1, mais il est toutefois préférable de veiller à ce que le support de fixation conserve une rigidité suffisante, laissée à l'appréciation du bureau d'étude. Les languettes d'ancrage 1111 peuvent être ensuite repliées en direction de la surface du support de fixation 111 sur laquelle sera fritté le matériau de friction 12. Les languettes d'ancrage 1111 repliées vont pouvoir s'enfoncer dans le matériau de friction lorsque celui-ci sera mis en place. Par ailleurs, lorsque le matériau de friction 12 est fixé à la surface du support de fixation 111, ils définissent entre eux une interface 13.

Le support de fixation 111 peut également présenter des évidements 1113, qui sont en l'occurrence des trous circulaires qui peuvent renforcer le rôle des languettes d'ancrage, ou même les remplacer.

Les interfaces d'accroche 112 comportent au moins un point d'accroche 1121. En l'occurrence, ces points d'accroche 1121 sont constitués par des trous circulaires. Des trous permettent de fixer le plot 1 à la base (21, 22) d'une garniture de frein 2, par exemple, grâce à un rivet 4. On nomme arbitrairement ici les centres de ces points d'accroche 1121 : A et A' pour les points d'accroche 1121 de la première interface d'accroche 112, et B et B' pour les points d'accroche 1121 de la deuxième interface d'accroche 112. Pour faciliter le montage, les deux points d'accroche 1121 de la première interface d'accroche sont préférablement séparés d'une même distance d que les deux points d'accroche 1121 de la deuxième interface d'accroche 112. Cette distance d est la longueur du segment joignant les centres A, A' ou B, B' des deux points d'accroche 1121 d'une même interface d'accroche 112, soit [AA']=d et [BB']=d.

Chaque interface d'accroche 112 présente en outre au moins un premier relief de reprise d'effort et/ou de couple 1122 car il est nécessaire que les efforts ne soient pas repris par les points d'accroche 1121. Selon les présents exemples de réalisation, les reliefs de reprise d'effort et/ou de couple 1122 sont un logement de forme rectangulaire. Ces reliefs de reprise d'effort et/ou de couple 1122 sont aptes à coopérer avec des reliefs complémentaires 23 formés dans la base (21, 22) de la garniture de frein 2.

Les cols 113 sont dimensionnés afin de former une zone de déformation privilégiée, ce qui permet au support de fixation 111 de s'accommoder de déplacements de translation et rotation selon toutes les directions en limitant les efforts et/ou les couples transmis aux interfaces d'accroche 112. La forme des cols 113 peut varier. Par exemple, d'après l'exemple de réalisation de la figure 1, ceux-ci sont formés par des découpes arrondies entre le support de fixation 111 et chacune des interfaces d'accroche 112, alors que dans l'exemple de réalisation de la figure 2, les bords des cols 113 sont droits et parallèles entre eux. De plus, dans l'exemple de réalisation de la figure 2, les bords des cols 113 forment un angle avec le support de fixation 111 qui peut être un angle droit.

La garniture de frein selon les présents exemples de réalisation comporte deux parties, chaque partie comprenant :
- une base (21, 22), présentant une face frontale (212, 222), et une face dorsale (213, 223) du côté de laquelle peut être fixé un rail en queue d'aronde 3 par exemple par des rivets 7, la base (21, 22) peut être réalisée à partie d'une tôle mince, par exemple d'une épaisseur de 3 mm ;
- au moins un premier plot 1 fixé du côté de la face frontale (212, 222) de la base (21, 22).

Les bases (21, 22) composant la première et la deuxième partie de la garniture de frein 2 sont symétriques. Chaque partie de la garniture de frein 2 est apte à comprendre cinq plots 1.

Les bases (21, 22) comportent au moins un point de fixation 24, par exemple un alésage, pour fixer le plot 1 par les points d'accroche 1121 de ses interfaces d'accroche 112, par exemple grâce à des rivets 4.

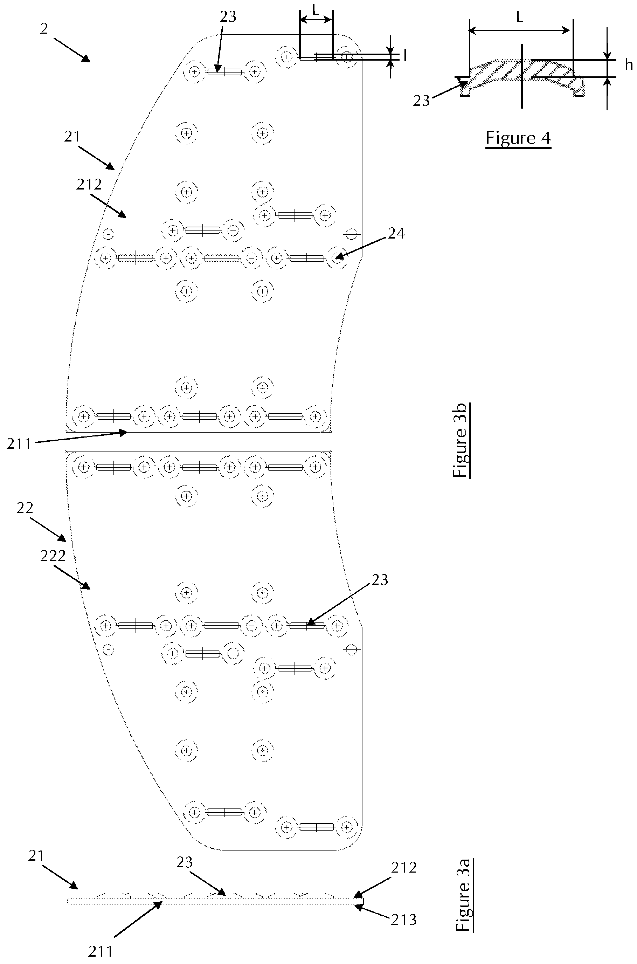

Les bases (21, 22) comportent aussi au moins un relief complémentaire 23 au relief de reprise d'effort et/ou de couple 1122 dudit plot, par exemple un demi-cisaillé apte à coopérer avec les logements de l'interface d'accroche 112 dudit premier plot 1. Un demi-cisaillé est une protubérance, par exemple réalisée par emboutissage de la tôle formant la base (21, 22) de la garniture de frein 2. Un demi-cisaillé tel que représenté est de forme rectangulaire, de longueur L, de largeur 1 et de hauteur h. La figure 4 présente une section du demi-cisaillé selon sa longueur L. Le demi-cisaillé présente de préférence un profil tel qu'il permet de guider le positionnement des logements de l'interface d'accroche 112 pour la mise en place des plots 1. Les demi-cisaillés peuvent ainsi présenter des profils arrondis ou pointus, ou encore à pans-coupés comme représenté sur la figure 4. Un tel profil évasé pour former les reliefs complémentaires 23, i.e. dont la base est plus large que le sommet, permet aussi de rattraper les jeux potentiels entre les dimensions du relief complémentaire 23 et celles du relief de reprise d'effort et/ou de couple 1122 correspondant. Cette absence de jeux est nécessaire pour que les efforts soient repris par les reliefs complémentaires 23 et non par les points d'accroches 1121 et les points de fixation 24.

Une garniture de frein 2 selon l'invention peut aussi comporter une cale 6, par exemple en acier ou en métal malléable, voire en tissu. De préférence, cette cale 6 est intercalée entre chaque interface d'accroche 112 d'un plot 1 et la face frontale (212, 222) de la base (21, 22) à laquelle le plot 1 est fixé, pour surélever l'ensemble du plot.

En outre, le support de fixation 111 et la surface supérieure (212, 222) de la base (21, 22) de la garniture de frein forment entre eux un espace 5. Cet espace 5 peut demeurer une zone vide ou être comblé par un isolant permettant de conserver la flexibilité du support de fixation 111.

## Revendications

1. Plot de friction (1) destiné à être monté sur une garniture de frein (2), comprenant un socle (11) et au moins un premier matériau de friction (12), le premier matériau de friction (12) étant fixé sur au moins une partie dudit socle (11), le socle (11) et le premier matériau de friction (12) définissant à leur interface (13) un premier plan, le plot (1) étant **caractérisé en ce que** le socle (11) présente :
- un support de fixation (111) auquel est fixé au moins le premier matériau de friction (12),
- au moins une première interface d'accroche (112) à distance du support de fixation (111) selon une direction parallèle au premier plan, pour fixer le plot (1) directement ou indirectement à la garniture de frein (2), et
- au moins un premier col (113) s'étendant parallèlement au premier plan, formant une lamelle élastique entre le support de fixation (111) et la première interface d'accroche (112), pour permettre au support de fixation (111) de s'accommoder de déplacements de translation et rotation selon toutes les directions.

2. Plot (1) selon la revendication 1, **caractérisé en ce qu'**au moins la première interface d'accroche (112) comporte au moins un point d'accroche (1121).

3. Plot (1) selon l'une quelconque des revendications 1 ou 2, **caractérisé en ce qu'**au moins la première interface d'accroche (112) présente au moins un premier relief de reprise d'effort et/ou de couple (1122).

4. Plot (1) selon l'une quelconque des revendications 1 à 3, **caractérisé en ce qu'**au moins le premier relief de reprise d'effort et/ou de couple (1122) est un logement.

5. Plot (1) selon l'une quelconque des revendications précédentes, **caractérisé en ce qu'**il présente deux interfaces d'accroche (112) disjointes, à distance du support de fixation (111) selon une direction parallèle au premier plan, la première interface d'accroche (112) et la deuxième interface d'accroche (112) étant reliées au support de fixation (111) respectivement par un premier et un deuxième col (113).

6. Plot (1) selon la revendication 5, **caractérisé en ce que** la première et la deuxième interface d'accroche (112) comprennent chacune deux points d'accroche (1121).

7. Plot (1) selon l'une quelconque des revendications précédentes, **caractérisé en ce que** le matériau de friction (12) est fritté sur le support de fixation (111) dudit socle (11).

8. Garniture de frein (2), en une ou plusieurs parties, chaque partie comprenant :
- une base (21, 22), présentant une face frontale (212, 222), et une face dorsale (213, 223) du côté de laquelle peut être fixé un rail en queue d'aronde (3),
- au moins un premier plot de friction (1) tel que défini selon l'une quelconque des revendications précédentes, fixé du côté de la face frontale (212, 222) de la base (21, 22).

9. Garniture de frein (2) selon la revendication 8, **caractérisée en ce que** la base (21, 22) de chaque partie de la garniture de frein (2) comporte au moins un point de fixation (24) apte à coopérer avec un point d'accroche (1121) de l'interface d'accroche (112) du plot (1).

10. Garniture de frein (2) selon l'une quelconque des revendications 8 ou 9, **caractérisée en ce qu'**au moins le premier plot (1) est fixé par au moins un point d'accroche (1121) à un point de fixation (24) de la base (21, 22) de la garniture de frein (2) grâce à un rivet (4).

11. Garniture de frein (2) selon l'une quelconque des revendications 8 à 10, **caractérisée en ce que** la base (21, 22) de chaque partie de la garniture de frein (2) présente au moins un relief complémentaire (23) au relief de reprise d'effort et/ou de couple (1122) dudit plot (1).

12. Garniture de frein (2) selon la revendication 11, **caractérisée en ce que** le relief complémentaire (23) au relief de reprise d'effort et/ou de couple (1122) est un demi-cisaillé.

13. Garniture de frein (2) selon l'une quelconque des revendications 8 à 12, **caractérisée en ce que** le support de fixation (111) dudit premier plot (1) et la face frontale (212, 222) de la base (21, 22) de la garniture de frein (2) à laquelle le premier plot (1) est fixé définissent entre eux un espace (5).

14. Garniture de frein (2) selon la revendication 13, **caractérisé en ce que** l'espace (5) comprend un matériau d'amortissement.

15. Garniture de frein (2) selon l'une quelconque des revendications 8 à 14, **caractérisée en ce que** chaque partie de la garniture de frein (2) comprend plusieurs plots (1).

## Patentansprüche

1. Reibklotz (1), der dazu bestimmt ist, auf einem Bremsbelag (2) montiert zu werden, einen Sockel (11) und zumindest ein erstes Reibmaterial (12) umfassend, wobei das erste Reibmaterial (12) auf zumindest einem Abschnitt des besagten Sockels (11) befestigt ist, wobei der Sockel (11) und das erste Reibmaterial (12) an ihrer Schnittstelle (13) eine erste Ebene definieren, wobei der Klotz (1) **dadurch gekennzeichnet ist, dass** der Sockel (11) folgendes aufweist:
- einen Befestigungshalter (111), an dem zumindest das erste Reibmaterial (12) befestigt ist,
- zumindest eine erste Haftschnittstelle (112) im Abstand zum Befestigungshalter (111) in eine parallele Richtung zur ersten Ebene, zum Befestigen des Klotzes (1) direkt oder indirekt auf dem Bremsbelag (2), und
- zumindest einen ersten Hals (113), der sich parallel zur ersten Ebene erstreckt, und eine elastische Lamelle zwischen dem Befestigungshalter (111) und der ersten Haftschnittstelle (112) bildet, um es dem Befestigungshalter (111) zu ermöglichen, sich an Vorschubbewegungen und Drehungen in alle Richtungen anzupassen.

2. Klotz (1) nach Anspruch 1, **dadurch gekennzeichnet, dass** zumindest die erste Haftschnittstelle (112) zumindest eine Haftstelle (1121) umfasst.

3. Klotz (1) nach einem der Ansprüche 1 oder 2, **dadurch gekennzeichnet, dass** zumindest die erste Haftschnittstelle (112) zumindest ein erstes Relief zur Aufnahme von Kraft und/ oder Drehmoment (1122) umfasst.

4. Klotz (1) nach einem der Ansprüche 1 bis 3, **dadurch gekennzeichnet, dass** zumindest das erste Relief zur Aufnahme von Kraft und/ oder Drehmoment (1122) ein Gehäuse ist.

5. Klotz (1) nach einem der vorherigen Ansprüche **dadurch gekennzeichnet, dass** er zwei getrennte Haftschnittstellen (112) aufweist, im Abstand zum Befestigungshalter (111) in eine parallele Richtung zur ersten Ebene, wobei die erste Haftschnittstelle (112) und die zweite Haftschnittstelle (112) jeweils über einen ersten und einen zweiten Hals (113) mit dem Befestigungshalter (111) verbunden sind.

6. Klotz (1) nach Anspruch 5, **dadurch gekennzeichnet, dass** die erste und die zweite Haftschnittstelle (112) jeweils zwei Haftstellen (1121) aufweisen.

7. Klotz (1) nach einem der vorherigen Ansprüche **dadurch gekennzeichnet, dass** das Reibmaterial (12) auf den Befestigungshalter (111) des besagten Sockels (11) gesintert ist.

8. Bremsbelag (2) in einem oder mehreren Abschnitten, wobei jeder Abschnitt folgendes umfasst:
- eine Basis (21, 22), die eine Vorderseite (212, 222) und eine Rückseite (213, 223) aufweist, auf deren Seite eine Schwalbenschwanzschiene (3) befestigt werden kann,
- zumindest einen ersten Reibklotz (1), wie er in einem der vorherigen Asprüche definiert ist, der auf Seite der Vorderseite (212, 222) der Basis (21, 22) befestigt ist.

9. Bremsbelag (2) nach Anspruch 8, **dadurch gekennzeichnet, dass** die Basis (21, 22) eines jeden Abschnitts des Bremsbelags (2) zumindest eine Befestigungsstelle (24) umfasst, die in der Lage ist, mit einer Haftstelle (1121) der Haftschnittstelle (112) des Klotzes (1) zusammenzuwirken.

10. Bremsbelag (2) nach einem der Ansprüche 8 oder 9, **dadurch gekennzeichnet, dass** zumindest der erste Klotz (1) dank eines Niets (4) über zumindest eine Haftstelle (1121) an einer Befestigungsstelle (24) der Basis (21, 22) des Bremsbelags (2) befestigt ist.

11. Bremsbelag (2) nach einem der Ansprüche 8 bis 10, **dadurch gekennzeichnet, dass** die Basis (21, 22) eines jeden Abschnitts des Bremsbelags (2) zumindest ein ergänzendes Relief (23) zum Relief zur Aufnahme von Kraft und/ oder Drehmoment (1122) des besagten Klotzes (1) aufweist.

12. Bremsbelag (2) nach Anspruch 11, **dadurch gekennzeichnet, dass** das ergänzende Relief (23) zum Relief zur Aufnahme von Kraft und/ oder Drehmoment (1122) eine Halbscherung ist.

13. Bremsbelag (2) nach einem der Ansprüche 8 bis 12, **dadurch gekennzeichnet, dass** der Befestigungshalter (111) des besagten ersten Klotzes (1) und die Vorderseite (212, 222) der Basis (21, 22) des Bremsbelags (2), auf der der erste Klotz (1) befestigt ist, zwischen sich einen Raum (5) definieren.

14. Bremsbelag (2) nach Anspruch 13, **dadurch gekennzeichnet, dass** der Raum (5) ein Dämpfungsmaterial umfasst.

15. Bremsbelag (2) nach einem der Ansprüche 8 bis 14, **dadurch gekennzeichnet, dass** jeder Abschnitt des Bremsbelags (2) mehrere Klötze (1) umfasst.

## Claims

1. Friction pad (1) intended to be mounted on a brake lining (2), comprising a base (11) and at least one first friction material block (12), the first friction material block (12) being attached to at least one portion of said base (11), the base (11) and the first friction material block (12) defining a first plane at the interface (13) thereof, the pad (1) being **characterised in that** the base (11) has:
- a mounting bracket (111) to which is attached at least the first friction material block (12),
- at least one first hooking interface (112) distant from the mounting bracket (111) in a direction parallel to the first plane, for directly or indirectly attaching the pad (1) to the brake lining (2), and
- at least one first neck (113) extending parallel to the first plane, forming a resilient leaf between the mounting bracket (111) and the first hooking interface (112), in order to enable the mounting bracket (111) to accommodate translational and rotational movements in every direction.

2. Pad (1) according to claim 1, **characterised in that** at least the first hooking interface (112) comprises at least one hooking point (1121).

3. Pad (1) according to any of claims 1 or 2, **characterised in that** at least the first hooking interface (112) has at least one first relief of the force and/or torque take-up (1122).

4. Pad (1) according to any of claims 1 to 3, **characterised in that** at least the first relief of the force and/or torque take-up (1122) is a housing.

5. Pad (1) as claimed in any preceding claim, **characterised in that** it has two separate hooking interfaces (112), distant from the mounting bracket (111) in a direction parallel to the first plane, the first hooking interface (112) and the second hooking interface (112) being connected to the mounting bracket (111) respectively by a first and a second neck (113).

6. Pad (1) according to claim 5, **characterised in that** the first and the second hooking interfaces (112) each include two hooking points (1121).

7. Pad (1) as claimed in any preceding claim, **characterised in that** the friction material block (12) is sintered on the mounting bracket (111) of said base (11).

8. Brake lining (2), in one or several portions, each portion comprising:
- a base element (21, 22), having a front surface (212, 222), and a dorsal surface (213, 223) on the side of which can be attached a dovetail rail (3),
- at least one first friction pad (1) such as defined as claimed in any preceding claim, attached to the side of the front surface (212, 222) of the base element (21, 22).

9. Brake lining (2) according to claim 8, **characterised in that** the base element (21, 22) of each portion of the brake lining (2) comprises at least one mounting point (24) able to cooperate with a hooking point (1121) of the hooking interface (112) of the pad (1).

10. Brake lining (2) according to any of claims 8 or 9, **characterised in that** at least the first pad (1) is attached par at least one hooking point (1121) to one mounting point (24) of the base element (21, 22) of the brake lining (2) thanks to a rivet (4).

11. Brake lining (2) according to any of claims 8 to 10, **characterised in that** the base element (21, 22) of each portion of the brake lining (2) has at least one relief complementary (23) to the relief of the force and/or torque take-up (1122) of said pad (1).

12. Brake lining (2) according to claim 11, **characterised in that** the relief complementary (23) to the relief of the force and/or torque take-up (1122) is a half-shear.

13. Brake lining (2) according to any of claims 8 to 12, **characterised in that** the mounting bracket (111) of said pad (1) and the front surface (212, 222) of the base element (21, 22) of the brake lining (2) to which the first pad (1) is attached defining a space (5) between them.

14. Brake lining (2) according to claim 13, **characterised in that** the space (5) comprises a damping material.

15. Brake lining (2) according to any of claims 8 to 14, **characterised in that** each portion of the brake lining (2) comprises several pads (l).
